# NEUE EUROPÄISCHE PATENTSCHRIFT

(11) **EP 0 491 352 B2**
(45) Veröffentlichungstag und Bekanntmachung des Hinweises auf die Entscheidung über den Einspruch: **29.11.2000**
(45) Hinweis auf die Patenterteilung: 07.12.1994
(21) Anmeldenummer: 91121594.5
(22) Anmeldetag: 17.12.1991
(51) Int. Cl.: C10L 1/10, C10L 1/14, C07F 7/26

(54) **Treibstoffzusatz und Verfahren zur Herstellung desselben**
Motor fuel additive, and method of manufacture
Additif pour carburant, et son procédé de fabrication

(30) Priorität: 19.12.1990 DE 4040557; 14.08.1991 DE 4126789
(43) Veröffentlichungstag der Anmeldung: 24.06.1992
(73) Patentinhaber: ALCOR CHEMIE AG, CH-6340 Baar (CH)
(72) Erfinder: Zobel, Günter Georg Fritz, CH-6315 Oberägeri (CH); Deibel, Fritz Ulrich, W-5024 Pulheim 1 (DE)
(74) Vertreter: Werner, Hans-Karsten, Dr.Dipl.-Chem.

(56) Entgegenhaltungen:
- DE-A- 1 420 936
- FR-A- 1 441 315
- US-A- 2 400 383
- US-A- 2 992 250
- US-A- 3 038 916
- US-A- 3 038 919
- US-A- 3 052 530
- US-A- 3 098 089
- US-A- 3 133 099
- US-A- 3 277 134
- "Verordnung über Anlagen zur Lagerung, Abfüllung und Beförderung brennbarer Flüssigkeiten zu Lande", 5. Auflage, Carl Heymanns Verlag KG Köln (1995), Seiten 5,72,73

## Beschreibung

Gegenstand der vorliegenden Erfindung ist ein Treibstoffzusatz, welcher praktisch halogenfrei ist und vor allem keine Zusätze vom Typ des Scavenger enthält, die üblicherweise aus halogenierten Kohlenwasserstoffen bestehen, insbesondere Dibromethan und Dichlorethan. Weiterhin betrifft die Erfindung ein Verfahren zur Herstellung dieses Treibstoffzusatzes.

Bekanntlich werden seit 1930 Bleitetraethyl- (= TEL) und/oder Bleitetramethyl- (= TML) -Verbindungen zur Oktanzahlerhöhung von Ottokraftstoffen und zur Ventilsitzschmierung von Ottomotoren verwendet. Der derzeitige europäische Kraftfahrzeugbestand wird - trotz Einführung von Katalysatorfahrzeugen - das Angebot von verbleiten Kraftstoffen erforderlich machen, noch lange Zeit, vermutlich weit bis in das nächste Jahrtausend hinein.

Die heute verwendeten konventionellen TEL/TML-Erzeugnisse werden mit sogenannten Scavengern verdünnt, das sind im wesentlichen Dibromethan- und/oder Dichlorethan-Verbindungen. Die Verdünnung geschieht einerseits, um der Explosionsgefahr beim Transport dieser Additive vorzubeugen und andererseits, um die Bleioxide, die sich beim Verbrennen des Kraftstoffes im Motor bilden würden, als Chlor- bzw. Brom-Verbindungen aus dem Brennraum, den Zündkerzen und von den Ventilen zu entfernen. Die sich bildenden Bleichloride bzw. Bleibromide und deren Mischungen sind bei den Temperaturen im Motor ausreichend flüchtig. Dieses Entfernen des Bleis aus den Aggregaten war vor allem zu den Zeiten wichtig, in denen Bleigehalte im Ottokraftstoff von 0,4 gr/l und darüber verwendet wurden. Seit kurzem ist fast überall in Europa der Bleigehalt auf 0,15 gr/l herabgesetzt worden.

Gegen die Verwendung von TEL/TML in Ottokraftstoffen spricht die Giftigkeit der mitverwendeten Scavenger, also des Dichlorethans und/oder des Dibromethans. Dichlorethan, vor allem aber auch Dibromethan, sind erwiesenermaßen stark kanzerogen wirkende Chemikalien. Darüber hinaus hat man seit 1985 in verschiedenen Untersuchungen festgestellt, daß bei der Verbrennung scavengerhaltigen Ottokraftstoffes in Motoren toxikologisch relevante Mengen von polychlorierten und/oder polybromierten Dioxinen und Furanen gebildet werden. Aus diesen Gründen ist ein scavengerfreies TEL/TML mit den, den bisherigen Sicherheitsvorschriften entsprechenden Eigenschaften von großem Interesse. Die generelle Verfügbarkeit derartiger TEL/TML-Zubereitungen hat sogar zu einer freiwilligen Verpflichtung des Mineralölwirtschaftsverbandes (MWV) gegenüber dem Umweltministerium geführt.

Scavengerfreies TEL ist beispielsweise beschrieben in der US-PS 3,038,916 und US-PS 3,098,090. Zur thermischen Stabilisierung des beim Erwärmen sich rasch zersetzenden TEL werden entweder bis zu 30 Gew.-% einfach oder zweifach kondensierte aromatische Kohlenwasserstoffe mit einem Siedebereich über 180°C, tatsächlich aber zwischen 232 und 279°C, eingesetzt oder bis zu 25 Gew.-% acyclische gesättigte und ungesättigte Kohlenwasserstoffe mit 8 bis 10 Kohlenstoffatomen.

Mit Hilfe solcher Gemische wurde dann gemäß GB-PS 964,443 ein verbleiter Kraftstoff hergestellt, der jedoch zusätzlich Triarylphosphatester enthalten mußte, um verstärkte Ablagerungen auf den Ventilen zu vermindern.

Während in früheren Zeiten generell bis zu 0,4 g Blei pro Liter Treibstoff zugesetzt wurden, ist der Zusatz von Blei in der Bundesrepublik Deutschland per Gesetz auf 0,14 g Blei pro Liter beschränkt worden. Inzwischen besteht das dringende Bedürfnis, nicht nur den Gehalt an Blei, sondern auch den Gehalt an Scavenger im Treibstoff zu senken oder sogar völlig zu vermeiden. Diese Aufgabe konnte jetzt überraschend einfach dadurch gelöst werden, daß der Treibstoffzusatz aus 55 bis 65 Gew.-% Tetraethylblei und 35 bis 45 Gew.-% eines hocharomatischen Siedegrenzenbenzins besteht im Bereich von 180 bis 220°C entsprechend überwiegend C₉ bis C₁₁ sowie gegebenenfalls übliche Farbstoffe und Antioxidantien und er einen Flammpunkt von mindestens 56°C aufweist erhältlich durch Verrühren und Durchspülen der aus Natriumblei und Monochlorethan frisch synthetisierten Tetraethylbleis vor oder nach der Verdünnung mit dem Siedegrenzenbenzin bei Temperaturen von 5 bis 35°C, bei Drücken von 1 bis 8 bar mit inerten Gasen, während 18 bis 36 Stunden.

Besonders bevorzugt sind Treibstoffzusätze mit einem Gehalt von 61 bis 62 Gew.-% Tetraethylblei und 38 bis 39 Gew.-% Siedegrenzenbenzin. Dieses Siedegrenzenbenzin sollte weniger als 2 Gew.-% Benzol, Toluol, Ethylbenzol, Xylole, Isopropylbenzol und Mesitylen enthalten. Auch der Gehalt an deutlich höher-molekularen Aromaten mit mehr als C₁₃ sollte gering gehalten werden. Vorzugsweise weist das Siedegrenzenbenzin einen Siedebereich von 180 bis 220°C auf entsprechend überwiegend C₉ und C₁₁.

Dieser Befund war für die Fachwelt völlig überraschend, da man bisher unter anderem davon ausging, daß zur Verhinderung von Zersetzungen des Tetraethylblei entweder der Zusatz von halogenierten Kohlenwasserstoffen notwendig sei oder der Zusatz höher siedender aromatischer Kohlenwasserstoffe nebst Triarylphosphaten. Weiterhin war man der Ansicht, daß die Bleirückstände aus der Verbrennung des Tetraethylblei nur dann vollständig aus den Motoren möglich ist, wenn Scavenger in Form von halogenierten Kohlenwasserstoffen im Treibstoff anwesend sind. Der erfindungsgemäße Ersatz dieser Scavenger durch hocharomatisches Siedegrenzenbenzin führt erstaunlicherweise zu einer ausreichenden Stabilität des Tetraethylblei, ohne daß es dabei zu unerwünschten Zersetzungen kommt. Weiterhin haben umfangreiche Flottenteste in Motoren gezeigt, daß auch ein mit diesem neuen Treibstoffzusatz versetzter Treibstoff keine Ablagerungen im Motor bildet, dennoch der erwünschte Effekt, wie Antiklopfen und Schmierung der Ventilsitze, erreicht wird. Diese Versuche wurden durchgeführt mit einem Treibstoff, der versetzt war mit einem Gemisch aus 61,31 bis 61,65 Gew.-% Tetraethylblei, 38,35 bis 38,69 Gew.-% Siedegrenzenbenzin mit dem Bereich von 186 bis 211°C entsprechend mehr als 98 Gew.-% C₉ bis C₁₁. Der Treibstoffzusatz enthielt zusätzlich 1,65 kg/t roten Farbstoff (Red Dye 7BN6) sowie 0,06 kg/t eines Antioxidants (Topanol).

Tetraethylblei enthält von der Synthese her meist noch geringfügige Verunreinigungen an halogenierten Kohlenwasserstoffen. Diese Verunreinigungen liegen jedoch im Bereich von 500 ppm, während früher Scavenger in der gleichen Größenordnung wie Tetraethylblei zugesetzt wurden. Durch den Wegfall der Scavenger/halogenierten Kohlenwasserstoffe ist es möglich, den Gehalt von Dioxinen und Furanen in den Abgasen hochsignifikant zu senken und dadurch die Umweltbelastung erheblich zu reduzieren. Weiterhin hat sich gezeigt, daß durch die erfindungsgemäße Verwendung von hocharomatischen Siedegrenzenbenzin im Bereich von 180 bis 220°C nicht mehr die Ruß- und Kohlenstoffablagerungen auf den Ventilen einerseits und durch den Zusatz der verminderten Mengen TEL im Kraftstoff insgesamt nicht mehr die Bleioxidablagerungen auf den Ventilen andererseits beobachtet werden. Dennoch reicht der Bleigehalt noch aus, die Ventilsitze ausreichend zu schmieren.

Die weiteren Untersuchungen haben gezeigt, daß im Gegensatz zu konventionellen scavengerhaltigen Treibstoffzusätzen der Flammpunkt des erfindungsgemäßen Treibstoffzusatzes leicht unter den Wert von 55°C abfällt, was einer Einstufung in eine andere Gefahrengutklasse als AIII zur Folge hat, einer Tatsache die beim Transport und bei der Lagerung in den Raffinerien als ungünstig anzusehen ist.

Flammpunktmessungen in diesen TEL-Zubereitungen ergaben Werte von 20 bis 33°C, obwohl solche aufgrund der Literaturangaben des Lösungsmittels und des unverdünnten TEL keineswegs zu erwarten waren. Der Literaturwert des Flammpunktes für unverdünntes TEL liegt bei 80°C, der des verwendeten Lösungsmittels abei 63°C.

Die weitere Untersuchung hat ergeben, daß die Erklärung für diese außergewöhnliche Flammpunktsdepression im Verlauf der TEL/TML-Synthese aus Natriumbleilegierung mit Monochlorethan/Monochlormethan zu suchen ist. Es kommt bei dieser Synthese zu Nebenreaktionen, die ein instabiles Bleitriethanchlorid entstehen lassen. Dieses Nebenprodukt zerfällt in relativ kurzer Zeit in Blei, Bleioxid und verschiedene, niedrig siedende Kohlenwasserstoffe wie Ethylen, Ethan und Butan. Diese Restkohlenwasserstoffe sind für die Flammpunktsdepression verantwortlich und werden noch bis zu einer Zeit von 8 bis 20 Tagen nach Ende der Reaktion gebildet.

Die von Zeit zu Zeit notwendigen Reinigungen der TEL/TML-Lagertanks in den Raffinerien haben gezeigt, daß dieser Zerfall und damit die Bildung der niedrigen Kohlenwasserstoffe auch bei scavengerhaltiger Zubereitung auftritt, d.h. also, daß diese instabile Bleiverbindung auch hier gebildet wird und anschließend zerfällt. Die Erscheinung des niedrigen Flammpunktes kann jedoch hier nicht beobachtet werden. Anscheinend wirken die anwesenden Scavenger flammhemmend und flammlöschend.

Unerwarteterweise hat sich weiterhin gezeigt, daß der Zerfall des Bleitriethanchlorids und damit die Bildung der Flammpunkt erniedrigenden Kohlenwasserstoffe unterbunden bzw. stark verlangsamt wird, wenn das TEL entweder vor oder auch nach Verdünnen mit dem Lösungsmittel einer Stickstoffnachbehandlung unterworfen wird. Versuche im großtechnischen Maßstab, bei denen TEL-Zubereitungen in einer Menge von ca. 15 to vorgelegt wurden, wurden einer Stickstoffatmosphäre ausgesetzt, die unter einem Druck von ca. 2 bis 4 bar - während 18 bis 36 Stunden - unter Rühren stand. Die Temperaturen des TEL lagen bei diesen Versuchen zwischen +5 und +35°C und der Behälter wurde ständig gerührt. Die Flammpunktsmessungen an den so behandelten Chargen lagen zwischen 56 und 58°C, wobei durch längeres Einwirken als 36 Stunden des Stickstoffdruckes sogar wieder Werte bis 62°C gemessen werden konnten.

Außer Stickstoff können für die erfindungsgemäße Erhöhung des Flammpunktes auch andere inerte Gase eingesetzt werden. Insbesondere kommt CO₂ in Frage sowie Edelgase. Aus Kostengründen sind aber Stickstoff oder CO₂ oder Gemische derselben bevorzugt.

Die Herstellung erfolgt dadurch, daß das aus Natriumblei und Monochlorethan frisch synthetisierte Tetraethylblei vor oder nach der Verdünnung mit dem hocharomatischen Siedegrenzenbenzin bei Temperaturen von 5 bis 35°C bei Drücken von 1 bis 8 bar mit inerten Gasen verrührt und durchspült wird.

## Patentansprüche

1. Bleihaltiger Treibstoffzusatz, der aromatische Kohlenwasserstoffe, aber praktisch keine halogenierten Kohlenwasserstoffe enthält, dadurch gekennzeichnet daß er besteht aus 55 bis 65 Gew.-% Tetraethylblei und 35 bis 45 Gew.-% eines hocharomatischen Siedegrenzenbenzins im Bereich von 180 bis 220°C entsprechend überwiegend C₉ bis C₁₁ sowie gegebenenfalls übliche Farbstoffe und Antioxidantien und er einen Flammpunkt von mindestens 56°C aufweist erhältlich durch Verrühren und Durchspülen der aus Natriumblei und Monochlorethan frisch synthetisierten Tetraethylbleis vor oder nach der Verdünnung mit dem Siedegrenzenbenzin bei Temperaturen von 5 bis 35°C, bei Drücken von 1 bis 8 bar mit inerten Gasen, während 18 bis Stunden.

2. Treibstoffzusatz gemäß Anspruch 1, dadurch gekennzeichnet, daß er aus 61 bis 62 Gew.-% Tetraethylblei und 38 bis 39 Gew.-% Siedegrenzenbenzin besteht.

3. Verfahren zur Herstellung eines Treibstoffzusatzes gemäß Anspruch 1 oder 2, dadurch gekennzeichnet, daß das aus Natriumblei und Monochlorethan frisch synthetisierte Tetraethylblei vor oder nach der Verdünnung mit dem Siedegrenzenbenzin bei Temperaturen von 5 bis 35°C, bei Drücken von 1 bis 8 bar während 18 bis 36 Stunden mit inerten Gasen verrührt und durchspült wird.

## Claims

1. A lead-containing fuel additive containing aromatic hydrocarbons, but virtually no halogenated hydrocarbons, characterized by consisting of from 55 to 65% by weight of tetraethyllead and from 35 to 45% by weight of a highly aromatic special boiling point (SBP) petrol having a boiling point range of from 180 °C to 220 °C, corresponding to predominantly C₉ to C₁₁, and optionally conventional colorants and antioxidants, and having a flash point of at least 56 °C, said additive being obtainable by stirring and thoroughly purging the tetraethyllead freshly synthesized from sodium lead and monochloroethane with inert gases at temperatures of from 5 °C to 35 °C at pressures of from 1 to 8 bar for 18 to 36 hours prior to or after dilution with the SBP petrol.

2. The fuel additive according to claim 1, characterized by consisting of from 61 to 62% by weight of tetraethyllead and from 38 to 39% by weight of SBP petrol.

3. A process for producing a fuel additive according to claim 1 or 2, characterized in that the tetraethyllead freshly synthesized from sodium lead and monochloroethane is stirred and thoroughly purged with inert gases at temperatures of from 5 °C to 35 °C at pressures of from 1 to 8 bar for 18 to 36 hours prior to or after dilution with the SBP petrol.

## Revendications

1. Additif pour carburant, contenant du plomb, qui contient des hydrocarbures aromatiques, mais pratiquement pas d'hydrocarbures halogénés, caractérisé en ce qu'il est composé de 55 à 65 % en poids de plomb-tétraéthyle et 35 à 45 % en poids d'une essence fortement aromatique à limite définie d'ébullition, comprise entre 180 et 220°C, correspondant essentiellement à C₉ à C₁₁, ainsi qu'éventuellement des colorants et des anti-oxydants usuels, et en ce qu'il a un point d'éclair d'au moins 56°C, que l'on peut obtenir par mélange et agitation du plombtétraéthyle, fraîchement synthétisé à partir de plomb sodé et de monochloroéthane, avec des gaz inertes, à des températures de 5 à 35°C et à des pressions de 1 à 8 bars, pendant 18 à 36 heures, avant ou après sa dilution avec l'essence à limite définie d'ébullition.

2. Additif pour carburant selon la revendication 1, caractérisé en ce qu'il est composé de 61 à 62 % en poids de plomb-tétraéthyle et 38 à 39 % en poids d'essence à limite définie d'ébullition.

3. Procédé de préparation d'un additif pour carburant selon la revendication 1 ou 2, caractérisé en ce qu'on mélange et on agite le plomb-tétraéthyle fraîchement synthétisé à partir de plomb sodé et de monochloroéthane, pendant 18 à 36 heures avec des gaz inertes, à des températures de 5 à 35°C et à des pressions de 1 à 8 bars, avant ou après sa dilution avec l'esssence à limite définie d'ébullition.
